(19) Europäisches Patentamt

European Patent Office

Office européen des brevets

(11) **EP 1 003 336 A1**

(12) **EUROPEAN PATENT APPLICATION**

(43) Date of publication:
24.05.2000 Bulletin 2000/21

(51) Int. Cl.⁷: **H04N 7/36**

(21) Application number: **98830689.0**

(22) Date of filing: **17.11.1998**

(84) Designated Contracting States:
**AT BE CH CY DE DK ES FI FR GB GR IE IT LI LU MC NL PT SE**
Designated Extension States:
**AL LT LV MK RO SI**

(71) Applicant:
**STMicroelectronics S.r.l.**
**20041 Agrate Brianza (Milano) (IT)**

(72) Inventors:
• **Piccinelli, Emiliano**
**20052 Monza (IT)**

• **Pezzoni, Luca**
**20032 Cormano (IT)**
• **Pau, Danilo**
**20099 Sesto San Giovanni (IT)**

(74) Representative:
**Pellegri, Alberto et al**
**c/o Società Italiana Brevetti S.p.A.**
**Piazza Repubblica, 5**
**21100 Varese (IT)**

(54) **Video pictures compression and coding with decision step for field/frame and motion vectors DCT**

(57) The efficiency of a method of coding video data according to a standard wherein several types of fields (P, B) beside reference or Intra (I) fields are identified and various coding options exist for said non-Intra fields (P, B) including the removal of temporal redundancy from non-Intra fields (P, B) by way of an algorithm of motion estimation and identification of predictor macroblocks providing the best approximation according to a prediction mode selectable among respective predicting modes of the different types of non-Intra fields (P, B), calculating the discrete cosine transform (DCT) for blocks of data of said macroblocks of data according to a frame mode of decomposition, wherein the blocks are composed of lines of data belonging to a even lines semifield and to a odd lines semifield or in a field mode of decomposition, wherein the blocks are composed of lines of data belonging to the same semifield, quantizing and coding the data resulting from said discrete cosine transform (DCT) carried out by blocks of data to be stored, is increased by operating a choice between field or frame modes and motion comparation or no motion comparation with an algorithm of assessment and comparison of significative complexity indexes of macroblocks.

FIGURE 2

EP 1 003 336 A1

**Description**

FIELD OF THE INVENTION

This invention relates to video picture compression techniques and in particular to hardware implemented algorithms for optimizing the performance of systems of motion estimation and of discrete cosine transformation of the video data in compression and coding phases.

BACKGROUND OF THE INVENTION

The set of pixels of a field of a picture may be placed in a position of the subsequent picture obtained by translating the preceding one. Of course, these transpositions of objects may expose to the video camera parts that were not visible before as well as changes of their contours (e.g. zooming and the like).

The family of algorithms suitable to identify and associate these portions of images is generally referred to as "motion estimation". Such an association permits to calculate the portion of difference image by removing the redundant temporal information making more effective the subsequent process of compression by discrete cosine transform (DCT), quantization and entropy coding.

Such a method finds in the standard MPEG-2 a typical example and in consideration of the importance of such a widely adapted standard and by way of example, reference will be made in the following description to the MPEG2 standard for making the illustration easier to follow. Of course, the essential considerations that will be made remain perfectly valid for other standards and the system of motion estimation as well as the architecture of the present invention may be advantageously used and are applicable to systems processing digitized pictures according to protocols different from the MPEG2.

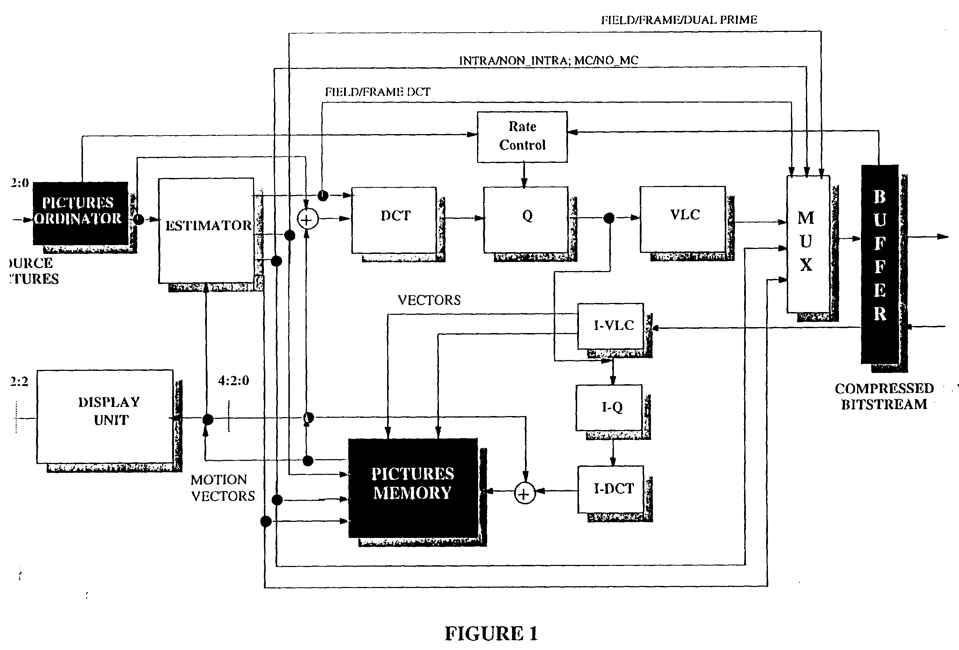

A typical block diagram of a video MPEG-2 coder is depicted in figure 1.

Such a system is made up of the following functional blocks:

**1) Field ordinator**

This block is composed of one or several field memories outputting the fields in the coding order required by the MPEG standard. For example, if the input sequence is I B B P B B P etc., the output orders will be I P B B P B B... .

- ◆ I (Intra coded picture) is a field and/or a semifield containing temporal redundancy;

- ◆ P (Predicted-picture) is a field and/or semifield from which the temporal redundancy in respect to the preceding I or P (previously co-decoded) has been removed;

- ◆ B (Bidirectionally predicted-picture) is a field and/or a semifield whose temporal redundancy in respect to the proceeding I and subsequent P (or preceding P and successive P) has been removed (in both cases the I and P pictures must be considered as already co/decoded).

Each frame buffer in the format 4:2:0 occupies the following memory space:

- ◆ standard PAL

| 720 x 576 x 8 for the luminance (Y) | = 3,317,760 bits |
|---|---|
| 360 x 288 x 8 for the chrominance (U) | = 829,440 bits |
| 360 x 288 x 8 for the chrominance (V) | = 829,440 bits |
| total Y + U + V | = 4,976,640 bits |

- ◆ standard NTSC

| 720 x 480 x 8 for the luminance (Y) | = 2,764,800 bits |
|---|---|
| 360 x 240 x 8 for the chrominance (U) | = 691,200 bits |
| 360 x 240 x 8 for the chrominance (V) | = 691,200 bits |
| total Y + U + V | =4,147,200 bits |

**2) Motion Estimator**

This is the block that removes the temporal redundancy from the P and B pictures.

It is worthy to note that this functional block operates only on the most energetic components, thus richest of picture information, of the sequence to be coded, such as the luminance component.

**3) DCT**

This is the block that implements the cosine-discrete transform according to the MPEG-2 standard.

The I picture and the error pictures P and B are divided in 8*8 blocks of pixels Y, U, V onto which the DCT transform is performed.

**4) Quantizer Q**

An 8*8 block resulting from the DCT transform is then divided by a quantizing matrix in order to reduce more or less drastically the magnitude of the DCT coefficients. In such a case, the information associated to the highest frequencies, less visible to human sight, tends to be removed. The result is reordered and sent to the successive block.

**5) Variable Length Coding (VLC)**

The codification words output from the quantizer tend to contain null coefficients in a more or less large number, followed by non null values. The null values preceding the first non null value are counted and the count figure constitutes the first portion of a codification word, the second portion of which represents the non null coefficient.

These paired values tend to assume values more probable than others. The most probable ones are coded with relatively short words (composed of 2, 3 or 4 bits) while the least probable are coded with longer words. Statistically, the number of output bits is less than in the case such methods are not implemented.

**6) Multiplexer and Buffer**

Data generated by the variable length coder, the quantizing matrices, the motion vectors and other syntactic elements are assembled for constructing the final syntax contemplated by the MPEG-2 standard. The resulting bitstream is stored in a memory buffer, the limit size of which is defined by the MPEG-2 standard and cannot be overflow. The quantizer block Q attends to the respect of such a limit, by making more or less drastic the division of the DCT 8*8 blocks depending on how far to the filling limit of such a memory buffer the system is and on the energy of the 8*8 source block taken upstream of the motion estimation and DCT transform process.

**7) Inverse Variable Length Coding (I-VLC)**

The variable length coding functions specified above are executed in an inverse order.

**8) Inverse Quantization (IQ)**

The words output by the I-VLC block are reordered in the 8*8 block structure, which is multiplied by the same quantizing matrix that was used for its precedent coding.

**9) Inverse DCT (I-DCT)**

The DCT transform function is inverted and applied to the 8*8 block output by the inverse quantization process. This permits to pass from the domain of spatial frequencies to the pixel domain.

**10) Motion Compensation and Storage**

At the output of the I-DCT block may alternatively be present:

- a decoded I picture (or semipicture) that must be stored in a respective memory buffer for removing the temporal redundancy in respect thereto from subsequent P and B pictures;

- a decoded prediction error picture (semipicture) P or B that must be summed to the information removed previously during the motion estimation phase. In case of a P picture, such a resulting sum, stored in dedicated memory buffer is used during the motion estimation process for the successive P pictures and B pictures.

These field memories are generally distinct from the field memories that are used for re-arranging the blocks.

**11) Display Unit**

This unit converts the pictures from the format 4:2:0 to the format 4:2:2 and generates the interlaced format for displaying the images.

Let the most energetic and therefore richer of information component, such as the luminance, representable as a matrix of N lines and M columns. Let us divide each field in portions called macroblocks, each of R lines and S columns.

The results of the divisions N/R and M/S must be two integer numbers, not necessarily equal to each other.

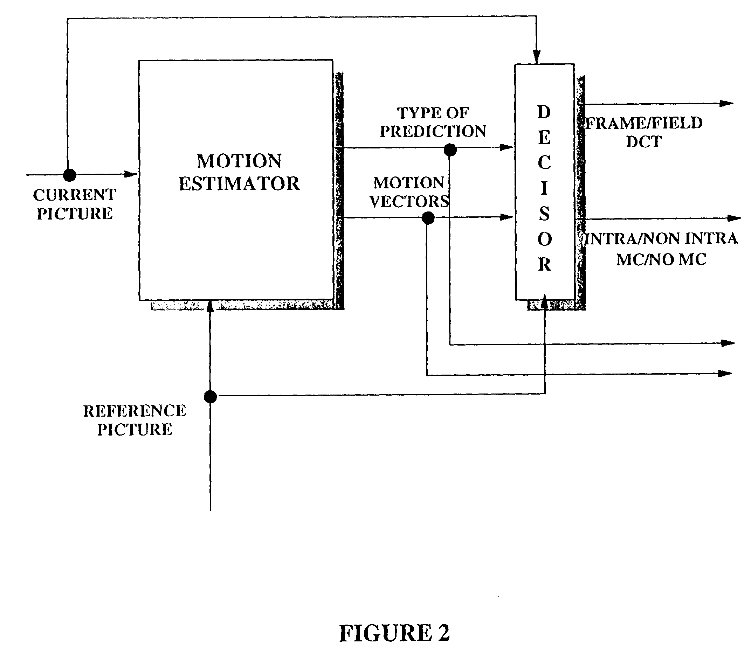

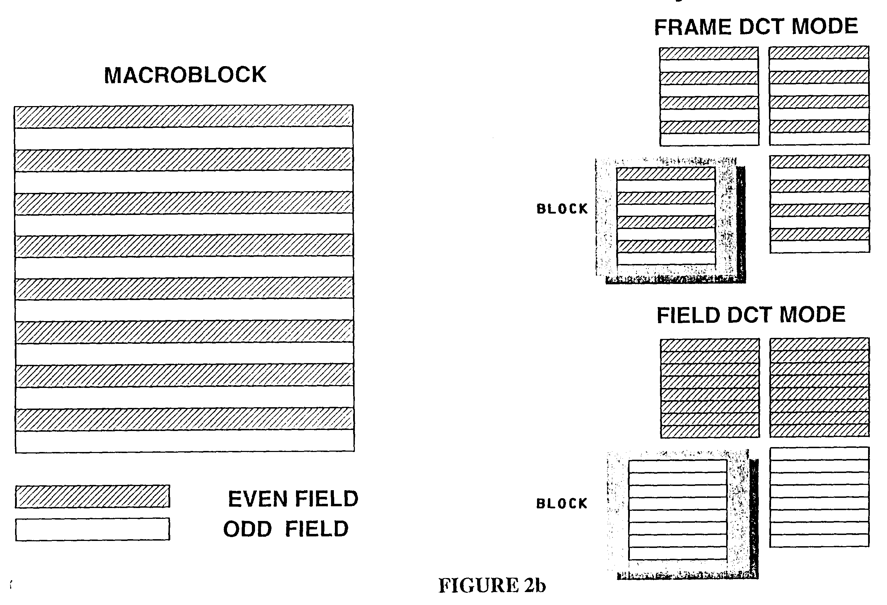

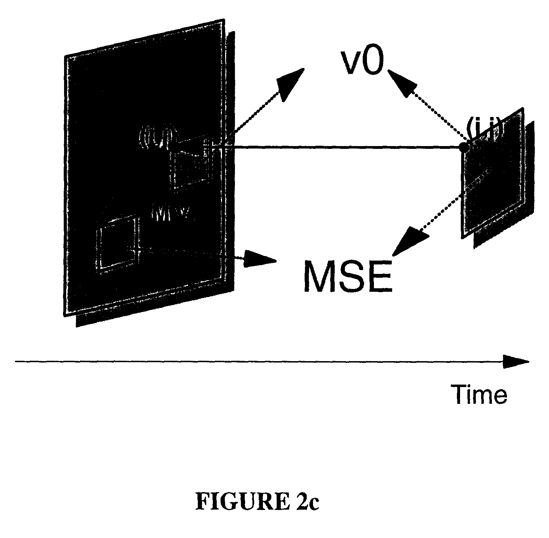

Upon referring to figure 2, we may identify two subsystems which comprise the "estimator block" shown in figure 1:

a) **Motion estimator**. This first subblock searches the predictors of each macroblock, according to a certain estimation algorithm and decides, amongst the different predicting options described by the standard, the one that yields the best results; it supplies the successive block and the final buffer with the motion vectors and the type of prediction selected.

The prediction modalities for the different types of fields may be:

Intra fields

- Intra

P fields

- Forward field

- Frame field

- Dual prime

B fields

- Field Forward

- Field Backward

- Filed Interpolated

- Frame Forward

- Frame Backward

- Frame Interpolated

**b) Decider** . This sub block is the part of the estimator that selects the coding mode of the single macroblocks, as well as the transform mode in the domain of the frequencies of the prediction errors relative to each one of them.

The different coding modes are:

Intra fields:

- Intra

P fields:

- Intra

- Forward Predictive

- No motion compensated

B fields:

- Intra

- Forward Predictive

- Backward Predictive

- Interpolated Predictive

However, as far as the DCT block is concerned (see figure 1), it has been said that this decomposes the different macroblocks in smaller parts of 8*8 pixels. Nevertheless, the decomposition of the macroblocks in blocks my be carried out in two different modes: *field* or *frame*.

From figure 2b, and supposing macroblocks of 16*16 pixels and that the rows belonging to two successive semifields compose the same picture, it is possible to divide the macroblock into 4 blocks, onto which the discrete cosine transform may be applied in two different modes:

- *Frame*:     the four macroblocks consist of rows belonging to both semifields.

- *Field*:     the four blocks consist of rows belonging to the same semifield

However, according to the MPEG2 video standard, there exist three possible coding modes for the fields present in each sequence: "Intra" (or I), "P" or "B", as already mentioned above.

In the case of Intra fields, each macroblock will be coded according o the "Intra" mode.

For the case of "non Intra" fields, it is possible to independently code each macroblock as follows:

if the current field is a P field, then the admitted coding modes are:

*Intra, no motion compensation, motion compensation*;

in case of B pictures, the admitted coding modes are:

*Intra, forward predictive, backward predictive, interpolated.*

Therefore, for Intra fields it is necessary to decide only how to apply the DCT transform to the different blocks (in a *field* or *frame* mode), while non Intra fields (P and B) it is also necessary to establish how to predict the single macroblock being considered.

**The decision algorithm (TM5)**

According to the known technique, as far as the decision on the type of DCT transform to be used is concerned, the procedure is the same for all types of fields and macroblocks. This procedure, as better illustrated in the ensuing description, is based on estimations of variance and correlation among samples of the detected predicted error. As far as the decision on the type of prediction is concerned, the procedure is based on variance estimates the selection of prediction mode considers the variance estimates.

**Selection of the prediction method**

Firstly, the algorithm calculates, for a chosen type of prediction, the mean square error:

$$MSE = \sum_{j=0}^{15} \sum_{i=0}^{15} \left( \varepsilon_{i,j} \right)^2$$

where $\varepsilon_{i,j} = p^*_{i,j} - p_{i,j}$ 'p*' indicating the pixels that compose the predictor and 'p' the pixels that compose the current macroblock at the position (i,j).

The current macroblock being processed will be coded without motion estimation ('Intra') if:

$$\begin{cases} MSE > VAR \\ MSE \geq 9 \cdot 256 \end{cases}$$

where "MSE" is the mean square error, whereas 'var' is the sampling variance of the reference macroblock, that is:

$$var = \sum_{j=0}^{15} \sum_{i=0}^{15} p_{i,j}^2 - \frac{\left( \sum_{j=0}^{15} \sum_{i=0}^{15} p_{i,j} \right)^2}{256}$$

where $p_{i,j}$ is the value of the pixel of the current macroblock.

This means that:

* for the current macroblock tp be coded as Intra, the predicting mean square error must be greater than the variance of the pixels that compose such a macroblock and also greater than a heuristically placed threshold. In such a case, it is no longer convenient to code the macroblock in the form of the predicting error, because the entropy associated to it would be greater than the one associated to the single pixels that compose it, thus degrading the compression efficiency;

* for the current macroblock to be coded as non-Intra, it is sufficient that at least one of the two above mentioned conditions be unverified.

At any rate, should be decided to code the current macroblock as "Intra", the coder will not consider the values of its single pixels directly as samples that will be thereafter transformed and quantized, but will perform these operations on samples obtained from the pixels, by subtracting from them the value "128" that is at the middle of the variability field.

By contrast, should a "non-Intra" coding be decided, it is possible to discriminate among two different cases depending on whether the current picture from which originates the reference macroblock, is either a 'B' or a 'P' picture.

In the first case, the system simply updates the structure predisposed to contain the motion vectors with the so found and selected values. In the second case, instead, the coder may decide to code the macroblock with or without "motion compensation" (MC/no-MC). To do this, it calculates the mean square error between the reference macroblock and the one placed on the field on which the prediction is based with the same absolute coordinates of the first (referred to as $V_0$) and compares it with the previously found mean square error (MSE). The coder will decide to use the motion estimation result if, and only if, the following two conditions are simultaneously verified:

$$\begin{cases} V_0 > \dfrac{5}{4} \cdot MSE \\ V_0 \geq 9 \cdot 256 \end{cases}$$

Figure 2c illustrates the scheme of the decision algorithm according to the known technique.

## DCT *field* or *frame*

Firstly, the procedure contemplates the calculation of the product of the variance estimates of the prediction errors of the two fields separately

$$d = \left[ \sum_{j=0}^{7}\sum_{i=0}^{15} \varepsilon_{Top_{(i,j)}}^2 - \frac{\left( \sum_{j=0}^{7}\sum_{i=0}^{15} \varepsilon_{Top_{(i,j)}} \right)^2}{128} \right] \cdot \left[ \sum_{j=0}^{7}\sum_{i=0}^{15} \varepsilon_{Bot_{(i,j)}}^2 - \frac{\left( \sum_{j=0}^{7}\sum_{i=0}^{15} \varepsilon_{Bot_{(i,j)}} \right)^2}{128} \right]$$

where $\varepsilon_{Top}$ is the prediction error of the "Top field" (composed of the even lines of the field: 0, 2, 4, ...), $\varepsilon_{Bot}$ is the predicting error of the "Bottom field" (composed of the odd lines of the field: 1, 3, 5, ...).

It should be remarked that, in the case of "Intra" fields, the prediction error is calculated in respect to an hypothetical block whose pixels have all the same value (equal to 128) which is at the center of the variability range of the pixel values (0-255). Should "d" be null, the prediction error associated to at least one of the two fields is uniform and thus it is convenient to compute a DCT field (only one coefficient after DC1). Indeed, at least one of the two fields has a null variance so the two fields are uncorrelated and the DCT is then computed in a "Field" mode, that is independently on the two semifields that make up the Y, U and V blocks. By contrast, if "d" is positive, then the correlation index should be calculated among the prediction errors on two fields:

$$\rho = \left[ \sum_{j=0}^{15}\sum_{i=0}^{15} \left( \varepsilon_{Top}[i,j] \cdot \varepsilon_{Bot}[i,j] \right) - \left( \sum_{i=0}^{15}\sum_{i=0}^{15} \varepsilon_{Top}[i,j] \cdot \sum_{j=0}^{15}\sum_{i=0}^{15} \varepsilon_{Bot}[i,j] \right) \Big/ 128 \right] \Big/ \sqrt{d}$$

When such an index is high (that is greater than a predefined threshold), the DCT is calculated in a "Frame" mode. By contrast, if it is small (less than a predefined threshold), the prediction error among the two fields is uncorrelated, thus the DCT is calculated in a "Field" mode.

From the above, according to the known technique, the selection of the prediction method and of the discrete cosine transformation mode (*field* or *frame*) is carried out through an algorithm which requires a remarkably complex processing, requiring the calculation of variance and correlation indexes through the execution of multiplication, square root, division operations etc. For these reasons a hardware implementation of the algorithm is rather burdensome and costly.

OBJECT AND SUMMARY OF THE INVENTION

Therefore the main objective of the present invention is to provide a method for coding video data of simpler hardware implementation than the known method and in particular to devise an algorithm of selection of the prediction method and of the DCT mode simpler than the algorithm of the prior art and less burdensome to be implemented by hardware means.

This objective is achieved with the method of the present invention, according to which the operations that need to be performed, are multiplications by powers of 2, practically implementable without any appreciable additional hardware cost. The method of the invention is not based on the calculation of variance and correlation indexes but rather on the evaluation of differences between adjacent pixels so identifying a complexity index, and on processing spread indexes of mean absolute prediction errors.

The method of the invention is even more clearly defined in claim 1 whereas the hardware structures for its implementation are defined in claim 2.

BRIEF DESCRIPTION OF THE DRAWINGS

Figure 1 is a basic scheme of an MPEG2 MP@ML coder including a functional block called "estimator" which constitutes the object of the present invention.

Figure 2 shows in a schematically suggestive manner the internal functional architecture of the estimator of figure 1 highlighting the object of the present invention which identifies itself in the sub-block called "decider".

Figure 2b shows the two alternative schemes, *frame* and *field*, of decomposition of a macroblock in blocks.

Figure 2c shows a correlation scheme followed by the algorithm of the invention.

Figure 3 is a functional block diagram of the decision step of the invention, relative to the selection amongst the different options "Intra/non Intra" and "motion compensation/no motion compensation".

Figure 4 shows the architecture of the calculation block of the "mean absolute spread" relative to the mean value upon which the "Intra/non Intra" selection is based.

Figure 5 is a block diagram of the selection method of the present invention, relative to the selection "*field*-DCT/*frame*-DCT" for each macroblock of the a field.

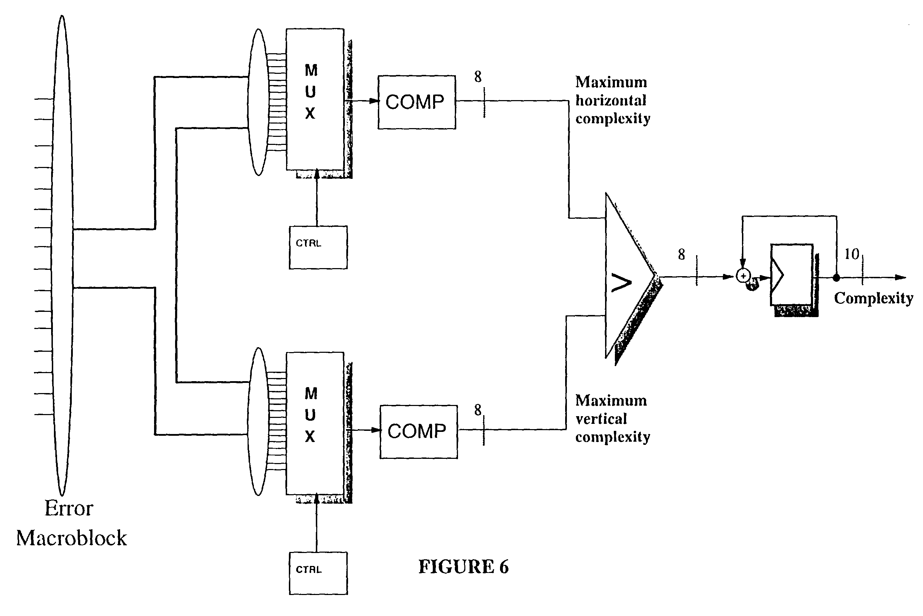

Figure 6 is an architecture of the blocks of figure 5, called "Complexity Field" and "Complexity Frame", which calculate the total complexity of the macroblock.

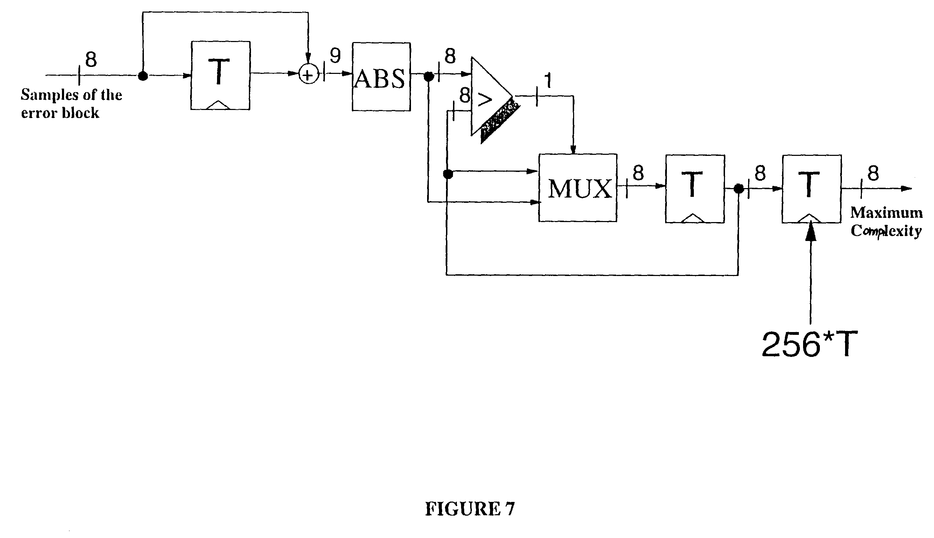

Figure 7 shows the architecture of the functional block of figure 6, called "COMP", which calculates the complexity of a block in one direction (horizontal or vertical).

DESCRIPTION OF AN EMBODIMENT OF THE INVENTION

The novel algorithm of the invention for choosing among the distinct options is as follows:

**Selection of the prediction method**

In first place, it is necessary to define the "mean absolute spread" computed in respect to the mean in the following manner, indicating with "$p_{i,j}$" the value of a pixel of the macroblock:

$$SMA_p \equiv \mathrm{E}\left[\left|p_{i,j} - \mu\right|\right] = \sum_{j=0}^{15}\sum_{i=0}^{15}\left|p_{i,j} - \mu\right|$$

$$\mu = \frac{\sum_{j=0}^{15}\sum_{i=0}^{15} p_{i,j}}{256}$$

This value, $SMA_p$, is calculated in respect to the macroblock being estimated a whose prediction of which is being sought. The E operator indicates an average operation and $\mu$ indicates the average value of the pixels.

By indicating with $\varepsilon_{ij}$ the prediction error for a specific pixel ($\varepsilon_{i,j} = p_{i,j} - p^*_{i,j}$) and with $\mu_\varepsilon$ the mean value of such errors, the absolute mean spread of the prediction errors in respect to their average value is given by:

$$SMA_\varepsilon \equiv \mathrm{E}\left[\left|\varepsilon_{i,j} - \mu_\varepsilon\right|\right] = \sum_{j=0}^{15}\sum_{i=0}^{15}\left|\varepsilon_{i,j} - \mu_\varepsilon\right|$$

$$\mu_\varepsilon = \frac{\sum_{j=0}^{15}\sum_{i=0}^{15} \varepsilon_{i,j}}{256}$$

Firstly this index SMA is used to select between Intra and non Intra coding. A macroblock will be coded as Intra if the following conditions are simultaneously met:

$$\begin{cases} SMA_\varepsilon > SMA_p \\ SMA_\varepsilon \geq Threshold1 \end{cases}$$

If the field to which the macroblock belongs is a B field, and both the above conditions are not complied with, no further control is performed, and the obtained predictor will be inserted in the bit stream together with the motion vectors that characterize it, the prediction method ("Forward", "Backward", or "Interpolated") and the quantized prediction error.

The same criterion is used also for the macroblocks belonging to a P field, in such case, however, after choosing between an Intra or non-Intra coding, it is necessary to perform a further discrimination in order to choose whether to use or not the motion compensation ("MC" mode or "No-MC" mode). A decision will be made on whether to use (and thereby insert the motion vector together with the prediction error and the prediction mode selected in the bit-stream) if the following conditions are satisfied:

$$\begin{cases} SMA_{\varepsilon 0} > SMA_\varepsilon \\ SMA_{\varepsilon 0} \geq Threshold2 \end{cases}$$

Where $SMA_{\varepsilon 0}$ is the absolute mean spread calculated in respect to the macroblock identified by the null vec-

9

tor.

By contrast, if it is chosen not to use motion compensation, a null motion vector will be inserted in place of the found one.

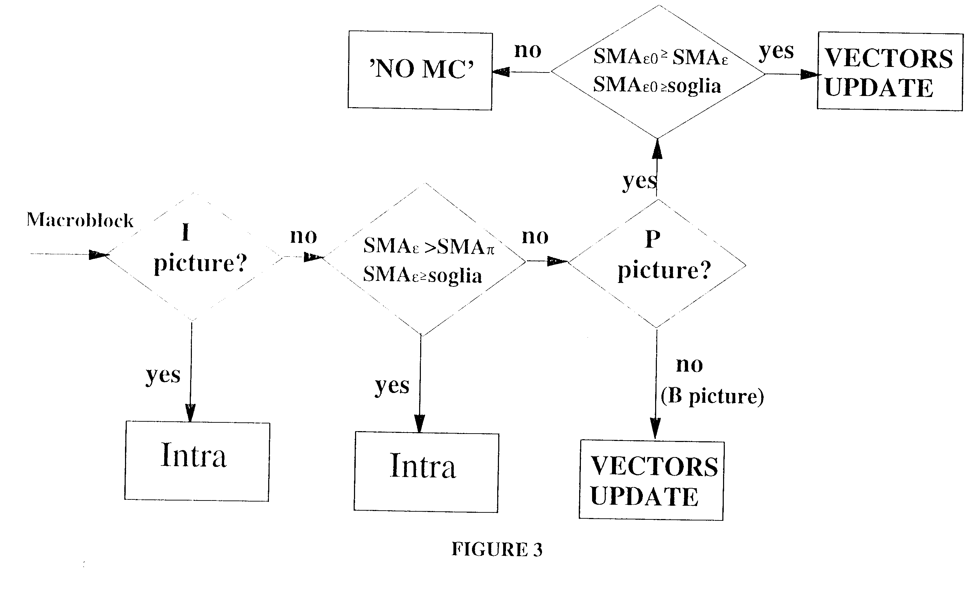

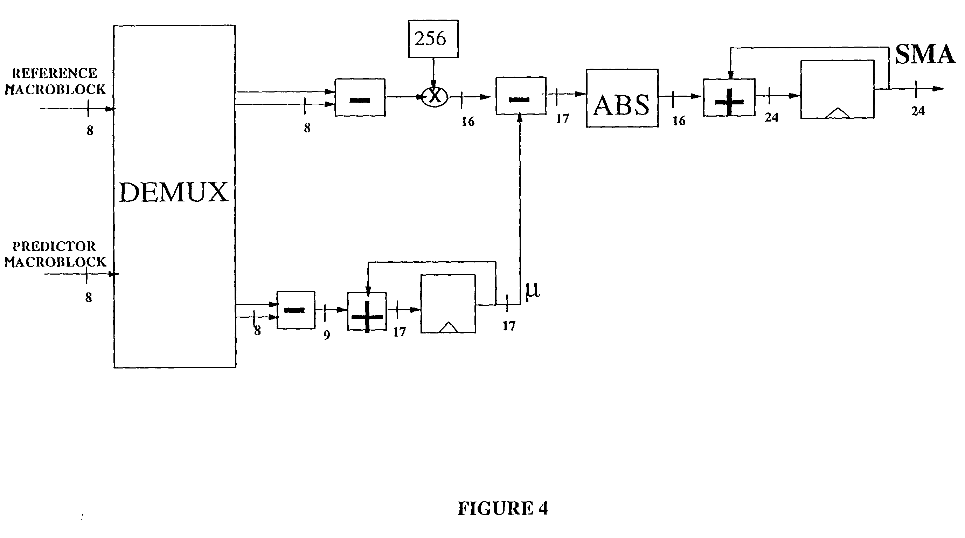

Figure 3 shows a flow chart of the above described method and figure 4 shows a possible hardware architecture for calculating the "absolute mean spread".

## DCT Field of Frame

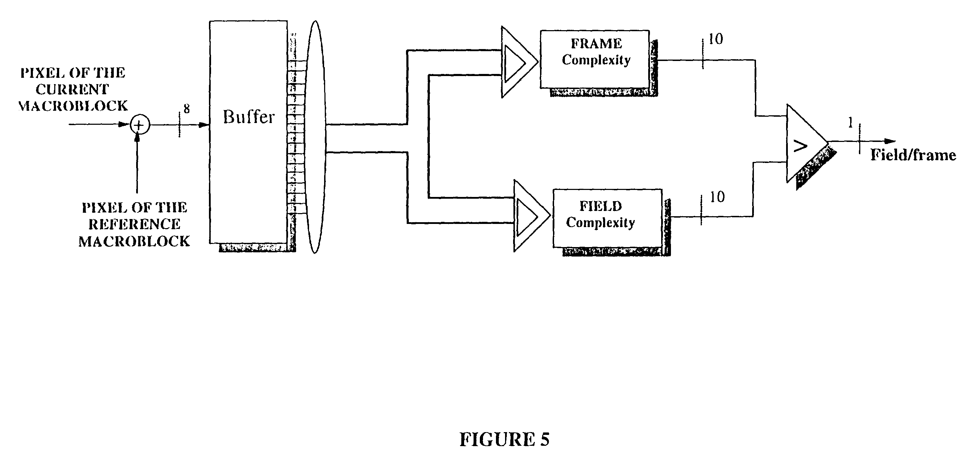

By referring to the scheme of figure 5, first a complexity index of the single blocks that compose the current macroblock is calculated, for both "field" and "frame" modality.

By the term "block complexity" it is intended the maximum of all the absolute differences between two horizontally adjacent pixels (belonging to the same line) and vertically adjacent pixels. By adding the maxima of the differences calculated for all the blocks composing a certain macroblock, a total macroblock complexity is obtained.

The calculation is repeated twice, once on the blocks obtained as though the successive DCT transform would be done in a "frame" mode, therefore with the lines of the blocks belonging to different semifields, and a second time by supposing that the DCT transform would be done in a "field" mode, and therefore with the lines of the blocks belonging to the same semifields. Once the two so computed complexity values are obtained, the lowest is selected and the DCT transform is actually performed according to such a selection.

It should be noted that the procedure is identical for the case in which the current macroblock is either Intra or non-Intra, though the complexity calculation will be carried out on the original macroblock in the first case, and on the error macroblock in the second case.

The method of the invention is particularly useful in application such as coders for DVD recording, camcorders and the like.

## Claims

1.  A method of coding video data according to a standard wherein several types of fields (P, B) beside reference or Intra (I) fields are identified and various coding options exist for said non-Intra fields (P, B) including the removal of temporal redundancy from non-Intra fields (P, B) by way of an algorithm of motion estimation and identification of predictor macroblocks providing the best approximation according to a prediction mode selectable among respective predicting modes of the different types of non-Intra fields (P, B), calculating the discrete cosine transform (DCT) for blocks of data of said macroblocks of data according to a frame mode of decomposition, wherein the blocks are composed of lines of data belonging to a even lines semifield and to a odd lines semifield or in a field mode of decomposition, wherein the blocks are composed of lines of data belonging to the same semifield, quantizing and coding the data resulting from said discrete cosine transform (DCT) carried out by blocks of data to be stored, characterized in that it comprises

    a) computing for pixels of the current macroblock the absolute mean spread in respect to the average value ($SMA_p$) and calculating the absolute mean spread ($SMA_\varepsilon$) of the prediction error of each pixel of the current macroblock in respect to the homologous pixel of said predictor macroblock;

    b) selecting a coding option for the data of the current macroblock as for the case of an Intra or non-Intra field depending on whether or not the following conditions are met:

$$\begin{cases} SMA_\varepsilon > SMA_p \\ SMA_\varepsilon \geq Threshold1 \end{cases}$$

    c) in case of not satisfaction of at least one of the above two conditions, establishing whether the macroblock belongs to a field (B) whose temporal redundancy in respect to a preceding field (I, P) and/or successive field (P) has been removed;

    d) if temporal redundancy has been removed the relative predictor being inserted in the data stream together with the motion vectors that characterizes it according to a predicting mode, chosen among a forward mode, a backwards mode, or an interpolated mode, and the quantized prediction error;

e) if temporal redundancy was not removed and the macroblock is recognized as belonging to a field (P) containing temporal redundancy, testing whether or not the following conditions are met:

$$\begin{cases} SMA_{\varepsilon 0} > SMA_{\varepsilon} \\ SMA_{\varepsilon 0} \geq Threshold2 \end{cases}$$

where $SMA_{\varepsilon 0}$ is the absolute mean spread of the prediction error by employing as a predictor of the current macroblock the macroblock identified by the null motion vector;

f) if both the above conditions e) are met, carrying out the motion compensation (MC), inserting the relative predictor in the data stream together with the motion vectors that characterize it, according to a predicting mode chosen between a forward mode or dual prime mode and the quantized prediction error;

g) if the above conditions e) are not met, motion compensation is not effected (No-MC) inserting the prediction error by using as predictor of the current macroblock, the macroblock identified by the null motion vector in the data stream together with a null motion vector;

h) calculating a complexity index of the single blocks of decomposition of the current macroblock according to a field mode and to a frame mode if of type Intra or of the error macroblock if the current macroblock is of type non-Intra, as the maximum value of the maximum absolute differences between any two adjacent pixels on a same line and on a same column of the block, and summing the maximum absolute differences of all the blocks defining a total complexity index of the relative macroblock;

i) identifying the minimum value of said complexity index for the same macroblock calculated in a frame mode and in a field mode, and calculating the discrete cosine transform (DCT) in the decomposition mode (frame, field) for which a minimum value of complexity index has been identified.

2.  A system for compressing and coding video data according to MPEG2 standard, comprising a functional block of motion estimation removing the temporal redundancy from non-Intra fields (P, B), composed of a first stage of motion estimation and by a second stage (decisor) deciding on whether or not applying motion compensation and selecting a decomposition mode of a macroblock of pixels of a field (I, P, B) in blocks on which carrying out a discrete cosine transform (frame DCT/field DCT), characterized in that said decisor stage comprises

    a first computing line of an absolute mean spread ($SMA_{\varepsilon}$) of the prediction error of each pixel belonging to the reference macroblock as compared to the homologous pixel of the predicting macroblock; and

    a second computing line of a vertical and horizontal complexity index composed of

    •   an input buffer storing the pixels of the error macroblock composed of the differences among the pixels of the current macroblock and the pixels of the reference macroblock;

    •   a pair of comparison lines operating in parallel, each comprising an input multiplexer (MUX, CTRL) and a comparator block (COMP) identifying the maximum difference between any two adjacent pixels, respectively on a same column and on a same line of the prediction error macroblock, if the current macroblock belongs to a non-Intra field, or of the current macroblock, if it belongs to an Intra field;

    •   a comparator (>) outputting the highest of the two maximum differences among adjacent pixels relative to a horizontal complexity and to a vertical complexity of the macroblock;

    •   a processing block outputting a total complexity index of the macroblock as the sum of the data output by said comparator (>).

FIGURE 1

FIGURE 2

MACROBLOCK

EVEN FIELD
ODD FIELD

FRAME DCT MODE

BLOCK

FIELD DCT MODE

BLOCK

FIGURE 2b

EP 1 003 336 A1

**FIGURE 2c**

EP 1 003 336 A1

EP 1 003 336 A1

Macroblock → **I picture?**

**I picture?** — yes → **Intra**

**I picture?** — no → $SMA_\varepsilon > SMA_\pi$ / $SMA_\varepsilon \geq soglia$

$SMA_\varepsilon > SMA_\pi$ / $SMA_\varepsilon \geq soglia$ — yes → **Intra**

$SMA_\varepsilon > SMA_\pi$ / $SMA_\varepsilon \geq soglia$ — no → **P picture?**

**P picture?** — no (B picture) → **VECTORS UPDATE**

**P picture?** — yes → $SMA_{\varepsilon 0} \geq SMA_\varepsilon$ / $SMA_{\varepsilon 0} \geq soglia$

$SMA_{\varepsilon 0} \geq SMA_\varepsilon$ / $SMA_{\varepsilon 0} \geq soglia$ — no → **'NO MC'**

$SMA_{\varepsilon 0} \geq SMA_\varepsilon$ / $SMA_{\varepsilon 0} \geq soglia$ — yes → **VECTORS UPDATE**

FIGURE 3

FIGURE 4

17

FIGURE 5

FIGURE 6

FIGURE 7

# EP 1 003 336 A1

**European Patent Office**

## EUROPEAN SEARCH REPORT

Application Number

EP 98 83 0689

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP 0 695 097 A (SHARP KK) 31 January 1996 * page 6, line 28 - page 7, line 32; figures 5,6 * | 1,2 | H04N7/36 |
| A | US 5 666 461 A (IGARASHI KATSUJI ET AL) 9 September 1997 * column 16, line 26 - column 17, line 39 * | 1,2 | |

TECHNICAL FIELDS
SEARCHED      (Int.Cl.6)

H04N

The present search report has been drawn up for all claims

| Place of search | Date of completion of the search | Examiner |
|---|---|---|
| BERLIN | 26 April 1999 | Raeymaekers, P |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons

& : member of the same patent family, corresponding
      document

EPO FORM 1503 03.82 (P04C01)

21

## ANNEX TO THE EUROPEAN SEARCH REPORT
## ON EUROPEAN PATENT APPLICATION NO.

EP 98 83 0689

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-1999

| Patent document cited in search report | | Publication date | Patent family member(s) | | Publication date |
|---|---|---|---|---|---|
| EP 0695097 | A | 31-01-1996 | JP | 8046971 A | 16-02-1996 |
| | | | US | 5721588 A | 24-02-1998 |
| | | | US | 5760835 A | 02-06-1998 |
| US 5666461 | A | 09-09-1997 | JP | 6078289 A | 18-03-1994 |
| | | | AU | 4159893 A | 06-01-1994 |
| | | | CA | 2099175 A | 30-12-1993 |
| | | | CN | 1090696 A | 10-08-1994 |
| | | | EP | 0577365 A | 05-01-1994 |
| | | | US | 5539466 A | 23-07-1996 |

EPO FORM P0459

For more details about this annex : see Official Journal of the European Patent Office, No. 12/82